# FASCICULE DE BREVET EUROPEEN

(11) **EP 2 875 273 B1**
(45) Date de publication et mention de la délivrance du brevet: **07.09.2016**
(21) Numéro de dépôt: 13739664.4
(22) Date de dépôt: 17.07.2013
(51) Int. Cl.: F16L 37/084

(54) **DISPOSITIF DE RACCORDEMENT FLUIDIQUE AVEC UNE BAGUE REDUCTRICE D'EFFORT DE MONTAGE**
FLUIDVERBINDUNGSVORRICHTUNG MIT EINEM RING ZUR REDUZIERUNG VON MONTAGEBELASTUNG
FLUID COMMUNICATION DEVICE HAVING A RING REDUCING MOUNTING STRESS

(30) Priorité: 23.07.2012 FR 1257124
(43) Date de publication de la demande: 27.05.2015
(73) Titulaire: A. RAYMOND et Cie, 38000 Grenoble (FR)
(72) Inventeur: CATHERIN, Paul, F-38120 Saint-Egreve (FR); CHAUPIN, Jérôme, F-38830 Saint-Pierre d'Allevard (FR)
(74) Mandataire: Prugneau, Philippe
(86) Numéro de dépôt international: PCT/EP2013/065103
(87) Numéro de publication internationale: WO 2014/016184

(56) Documents cités:
- FR-A1- 2 929 679
- JP-A- 7 260 073
- US-A1- 2007 246 937
- US-A1- 2010 090 461

## Description

### Domaine technique

L'invention concerne le domaine des raccords pour conduite fluidique et plus particulièrement un dispositif de raccordement fluidique comprenant un corps tubulaire permettant une circulation d'un fluide et présentant un embout tubulaire s'étendant selon une certaine direction axiale, l'embout tubulaire étant destiné à être raccordé par insertion axiale à une conduite enfichable présentant une gorge annulaire extérieure de verrouillage, le dispositif comportant en outre une tête d'assemblage dans laquelle est monté l'embout tubulaire, cette tête d'assemblage comportant une chambre de réception qui est coaxiale à l'embout tubulaire et qui est adaptée pour recevoir ladite conduite enfichable afin de raccorder celle-ci à l'embout tubulaire, la tête d'assemblage comportant aussi un élément de verrouillage en forme de U avec deux bras qui s'introduisent dans ladite chambre de réception selon une direction d'insertion perpendiculaire à ladite direction axiale, les deux bras étant adaptés pour s'écarter élastiquement l'un de l'autre dans ladite chambre de réception selon une direction transversale à ladite direction axiale quand la conduite est déplacée axialement dans la chambre jusqu'à une position de butée où elle est complètement raccordée à l'embout tubulaire, lesdits bras étant adaptés en outre pour s'engager dans ladite gorge annulaire de la conduite enfichable en se rapprochant l'un de l'autre quand ladite conduite enfichable a atteint sa position de butée par rapport à l'embout tubulaire de façon à verrouiller en position la conduite enfichable dans la tête d'assemblage.

### Technique antérieure

Ce type de dispositif de raccordement fluidique est couramment utilisé pour raccorder rapidement tout type de conduites fluidiques sur embase, en particulier dans le domaine automobile pour le raccordement d'injecteur carburant, de filtre, de radiateur. Dans certains cas, du fait de leur complexité, la réalisation par usinage de ces embases peut nécessiter plusieurs opérations de reprise. Mais pour diminuer le coût de leur réalisation, les fabricants de ces embases n'assurent plus une finition des rayons et chanfreins des conduites à raccorder ce qui fait que celles-ci peuvent détériorer les joints d'étanchéité prévus dans les dispositifs de raccordement comme celui défini plus haut. Il peut aussi y avoir des détériorations de l'élément de verrouillage du dispositif de raccordement si les efforts d'insertion de la conduite dans le dispositif de raccordement sont trop importants à cause de serrage ou d'accrochage entre les éléments à insérer mutuellement.

Dans la publication de brevet US 7,445,249, il est décrit une conduite enfichable qui présente une nervure annulaire servant à pré ouvrir un élément de verrouillage en forme de U monté dans un dispositif de raccordement fluidique. Mais comme indiqué plus haut, les fabricants d'embases avec conduite enfichable cherchent au contraire à réduire la complexité des conduites.

FR 2 929 679 montre un autre raccord connu.

### Exposé de l'invention

Le but de l'invention est de proposer un dispositif de raccordement fluidique conçu avec un organe de pré ouverture de l'élément de verrouillage en forme de U.

A cet effet, l'invention a pour objet un dispositif de raccordement fluidique comprenant un corps tubulaire permettant une circulation d'un fluide et présentant un embout tubulaire s'étendant selon une certaine direction axiale, l'embout tubulaire étant destiné à être raccordé par insertion axiale dans une conduite enfichable présentant une gorge annulaire extérieure de verrouillage, le dispositif comportant en outre une tête d'assemblage dans laquelle est monté l'embout tubulaire, cette tête d'assemblage comportant une chambre de réception qui est coaxiale à l'embout tubulaire et qui est adaptée pour recevoir ladite conduite enfichable afin de raccorder celle-ci à l'embout tubulaire, la tête d'assemblage comportant aussi un élément de verrouillage en forme de U avec deux bras qui s'introduisent dans ladite chambre de réception selon une direction d'insertion perpendiculaire à ladite direction axiale, les deux bras étant adaptés pour s'écarter élastiquement l'un de l'autre dans ladite chambre de réception selon une direction transversale à ladite direction axiale quand la conduite est déplacée axialement dans la chambre jusqu'à une position de butée où elle est complètement raccordée à l'embout tubulaire, lesdits bras étant adaptés en outre pour s'engager dans ladite gorge annulaire de la conduite enfichable en se rapprochant l'un de l'autre quand ladite conduite enfichable a atteint sa position de butée par rapport à l'embout tubulaire de façon à verrouiller en position la conduite enfichable dans la tête d'assemblage, caractérisé en ce qu'il est prévu en outre une bague intermédiaire montée coulissante dans ladite chambre de réception suivant ladite direction axiale pour réaliser une pré ouverture de l'élément de verrouillage, cette bague intermédiaire étant adaptée pour être poussée axialement par ladite conduite enfichable quand celle-ci est déplacée dans ladite chambre de réception en direction de l'embout tubulaire, cette bague intermédiaire présentant des chanfreins qui agissent pour écarter élastiquement les deux bras de l'élément de verrouillage l'un par rapport à l'autre juste avant que ladite conduite enfichable atteigne sa position de butée.

L'idée à la base de l'invention est donc de prévoir une bague intermédiaire coulissante qui accompagne l'insertion de la conduite dans le dispositif de raccordement jusqu'à sa position de butée sur l'embout tubulaire ce qui permet de réduire les efforts de montage de la conduite sur l'embout tubulaire.

Le dispositif de raccordement fluidique selon l'invention peut avantageusement présenter les particularités suivantes :
- il comporte un élément de rappel élastique monté dans ladite chambre de réception de telle façon à agir à l'encontre dudit déplacement axial de la bague intermédiaire pour la ramener dans une position initiale quand elle n'est pas poussée par une conduite
- ladite bague intermédiaire comporte des languettes témoin visuellement apparentes de l'extérieur de la tête d'assemblage quand ladite conduite est verrouillée sur l'embout tubulaire.

### Présentation sommaire des dessins

La présente invention sera mieux comprise et d'autres avantages apparaîtront à la lecture de la description détaillée d'un mode de réalisation pris à titre d'exemple nullement limitatif et illustré par les dessins annexés, dans lesquels :
- la figure 1 est une vue en perspective éclatée du dispositif de raccordement fluidique selon l'invention ;
- les figures 2 et 3, 4 et 5, 6 et 7, 8 et 9, sont des vues en coupe axiale selon deux plans axiaux, illustrant successivement différentes étapes de montage du dispositif de raccordement fluidique de la figure 1 ;
- les figures 10 et 11 sont des coupes radiales du dispositif de raccordement fluidique de la figure 1 dont le plan de coupe passe par l'élément de verrouillage, en particulier par le plan AA de la figure 9, et illustrant les positions respectivement déverrouillée et verrouillée de l'élément de verrouillage.

### Description des modes de réalisation

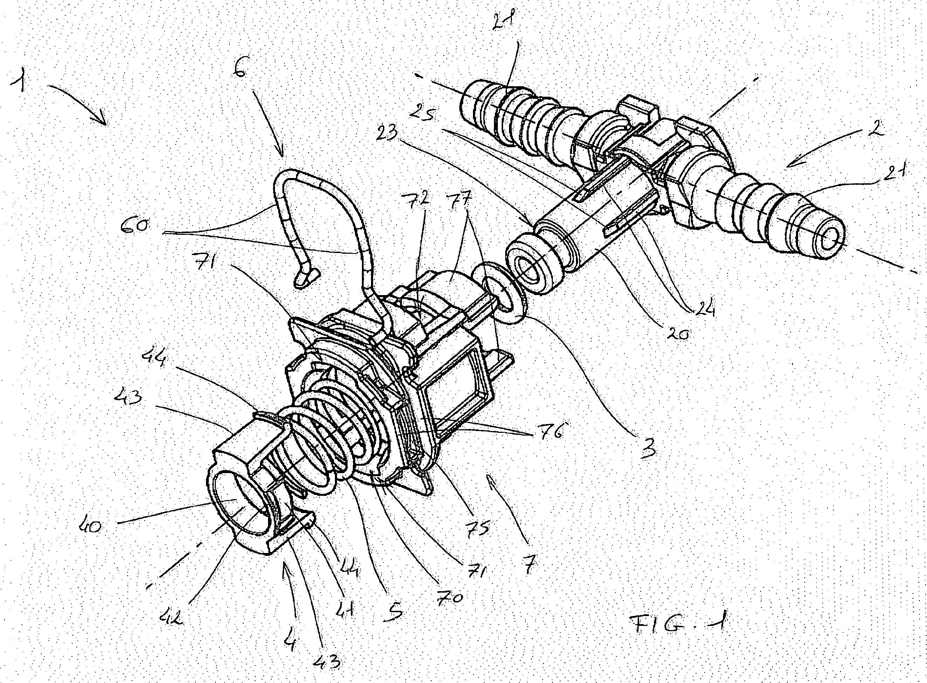

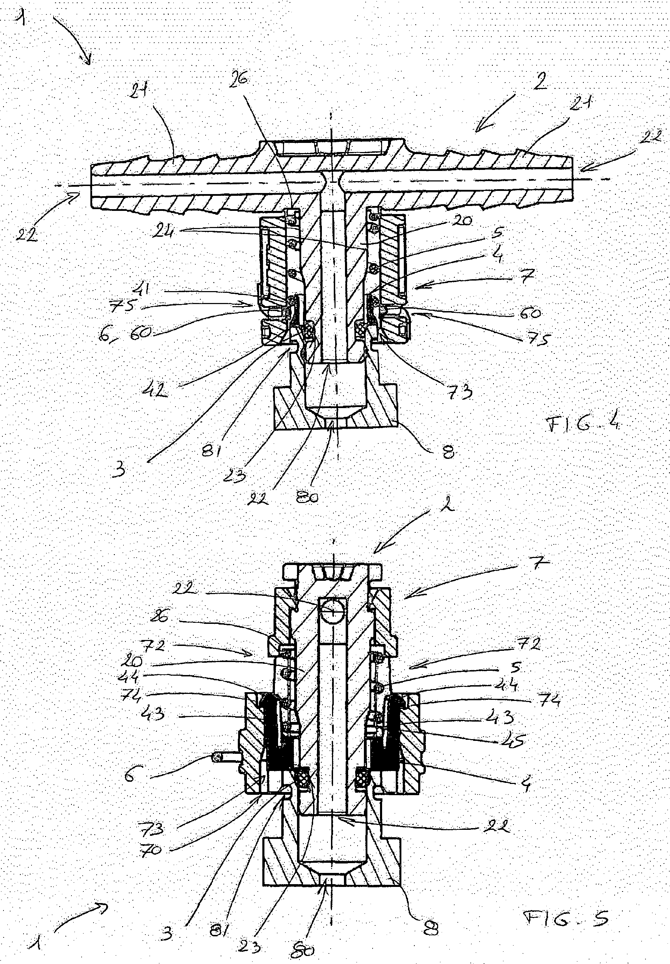

En référence aux figures, et en particulier, à la figure 1, le dispositif de raccordement fluidique 1 selon l'invention comporte un corps tubulaire 2, des moyens d'étanchéité 3, une bague intermédiaire 4, un élément de rappel élastique 5, des moyens de verrouillage 6 et une tête creuse formant une sorte de manchon 7. Le dispositif de raccordement fluidique 1 est destiné à recevoir une conduite fluidique enfichable 8 (visible sur les figures 4 à 11).

Le corps 2 comporte un embout tubulaire 20 qui s'étend selon une direction axiale A et ici deux embouts crantés 21 avec lesquels l'embout tubulaire 20 forme un T. L'embout tubulaire 20 et les embouts crantés 21 sont traversés axialement par des conduits 22 communiquant entre eux et formant également un T. Le corps 2 peut bien entendu avoir toute autre forme adaptée. Ainsi, un fluide peut circuler dans les conduits 22 de l'embout tubulaire 20 vers l'un ou les deux embouts crantés 22 et inversement. L'embout tubulaire 20 est globalement cylindrique et comporte une rainure circulaire 23 externe prévue vers son extrémité libre et destinée à recevoir un joint annulaire 3 formant les moyens d'étanchéité après emmanchement de la conduite fluidique 8 sur l'embout tubulaire 20. De plus, l'embout, tubulaire 20 comporte des nervures longitudinales 24, dans l'exemple au nombre de quatre, réparties sur la périphérie de l'embout tubulaire 20 et dont la fonction est expliquée plus loin. Ces nervures longitudinales 24 s'étendent sur une partie seulement de l'embout tubulaire 20, à l'opposé de l'extrémité libre de l'embout tubulaire 20. Les extrémités des nervures longitudinales 24 rejoignent la partie cylindrique de l'embout tubulaire 20 par l'intermédiaire de rampes inclinées 25 (visibles sur la figure 1) dont la fonction est expliquée plus loin.

La bague intermédiaire 4 est illustrée noircie sur les figures. Elle comporte un anneau de guidage 40 (visible sur la figure 1) présentant un diamètre intérieur légèrement supérieur aux dimensions extérieures des nervures longitudinales 24 de l'embout tubulaire 20 sur lequel elle est montée coulissante. Sur sa face externe, l'anneau de guidage 40 comporte une portion cylindrique 41 suivie d'un chanfrein 42 s'évasant en s'éloignant de la portion cylindrique 41. Le chanfrein 42 est disposé de sorte que, lorsque la bague intermédiaire 4 est emmanchée sur l'embout tubulaire 20, le chanfrein 42 est orienté à l'opposé de l'extrémité libre de l'embout tubulaire 20. Le chanfrein 42 est au moins en partie annulaire. Dans l'exemple illustré, le chanfrein 42 comporte deux portions concentriques disjointes. La bague intermédiaire 4 comporte en outre deux languettes 43 diamétralement opposées entre elles, solidaires de l'anneau de guidage 40. Ces languettes 43 sont prévues entre les portions du chanfrein 42 et sont inscrites dans un cylindre de diamètre supérieur à celui du chanfrein 42. Les languettes 43 sont par ailleurs élastiquement déformables. L'extrémité libre de chaque languette 43 est pourvue d'un ergot radial 44 dont la fonction est expliquée plus loin. Après emmanchement de la bague intermédiaire 4 sur l'embout tubulaire 20, les languettes 43 ménagent un logement annulaire 45 entre la bague intermédiaire 4 et l'embout tubulaire 20. La bague intermédiaire 4 est mobile en coulissement selon la direction A sur l'embout tubulaire 20 entre une position frontale dans laquelle elle est rapprochée de l'extrémité libre de l'embout tubulaire 20 et une position dorsale dans laquelle elle est éloignée de l'extrémité libre de l'embout tubulaire 20 et rapprochée des embouts crantés 21.

Dans l'exemple illustré, l'élément de rappel élastique 5 est un ressort de compression à spirales dont le diamètre intérieur est légèrement supérieur aux dimensions extérieures des nervures longitudinales 24 et dont le diamètre extérieur est légèrement inférieur au diamètre du logement annulaire 45 de la bague intermédiaire 4. Ainsi, l'élément de rappel élastique 5 peut être emmanché sur l'embout tubulaire 20 et en partie logé dans le logement annulaire 45 de la bague intermédiaire 4. Les extrémités de l'élément de rappel élastique 5 prennent appui, pour l'une contre le bord de l'anneau de guidage 40 de la bague intermédiaire 4, et pour l'autre contre un épaulement radial 26 du corps 2. L'élément de rappel élastique 5 tend à solliciter la bague intermédiaire 4 vers une position initiale de repos correspondant à la position frontale.

Les moyens de verrouillage comportent un élément de verrouillage 6 élastiquement déformable en forme de U, par exemple formé dans un fil ressort. L'élément de verrouillage 6 est représenté noirci sur les figures. Les deux bras ou branches 60 du U de l'élément de verrouillage 6 peuvent ainsi être éloignées selon une direction transversale à la direction A en force l'une de l'autre vers une position déverrouillée, avant d'être relâchées et de revenir élastiquement l'une vers l'autre dans une position verrouillée.

En son embouchure frontale, le manchon 7 comporte un orifice intérieur 70 de forme et dimensions sensiblement complémentaires à celles la bague intermédiaire 4. Ainsi, le manchon 7 est notamment pourvu de rainures longitudinales 71 destinées à autoriser le passage des languettes 43 de la bague intermédiaire 4. Ces rainures longitudinales 71 permettent de garantir la position angulaire de la bague intermédiaire 4 par rapport au manchon 7 lors de l'assemblage. Ces rainures longitudinales 71 sont éloignées entre elles d'une distance inférieure à la distance séparant les ergots radiaux 44. Ainsi, pour franchir les rainures longitudinales 71, les languettes 43 doivent être fléchies l'une vers l'autre. Dans l'alignement de ces rainures longitudinales 71, le manchon 7 est traversé, dans sa partie médiane, par deux fenêtres radiales 72, en regard desquelles les languettes 43 sont visibles lorsque la bague intermédiaire 4 est dans sa position dorsale. Après emmanchement du manchon 7 sur l'embout tubulaire 20, le manchon 7 et l'embout tubulaire 20 définissent entre eux une chambre annulaire 73 dans laquelle la bague intermédiaire 4 est logée de manière coulissante. Cette chambre annulaire 73 est coaxiale à l'embout tubulaire 20 et est destinée à recevoir l'extrémité d'une conduite fluidique enfichable 8 venant s'emmancher sur l'extrémité libre de l'embout tubulaire 20 par insertion axiale tout en poussant axialement la bague intermédiaire 4. L'orifice intérieur 70 du manchon 7 comporte de plus des évidements radiaux intérieurs 74 délimitant frontalement les fenêtres radiales 72 et destinés à recevoir l'appui des ergots radiaux 44 des languettes 43 de la bague intermédiaire 4. Le manchon 7 comporte en outre deux ouvertures radiales 75 diamétralement opposées entre elles, débouchant dans l'orifice intérieur 70. Les ouvertures radiales 75 sont disposées angulairement entre les rainures longitudinales 71. Ces ouvertures radiales 75 sont destinées à recevoir les branches 60 de l'élément de verrouillage 6 et sont bordées par des nervures radiales 76 (visibles sur la figure 1) guidant les branches 60 de l'élément de verrouillage 6 entre ses positions verrouillée et déverrouillée. A l'opposé des rainures longitudinales 71, le manchon 7 comporte deux ailes longitudinales 77 (visibles sur la figure 1), incurvées, disjointes entre elles et prolongeant l'orifice intérieur 70. Ces ailes longitudinales 77 sont dans l'alignement des rainures longitudinales 71 et destinées à chevaucher l'intersection entre les embouts crantés 21 du corps 2 pour orienter angulairement le manchon 7 par rapport au corps 2 lors de l'assemblage.

Pour le raccordement, on utilise une conduite fluidique 8 traversée par un orifice principal 80 et dont le diamètre externe est sensiblement égal à celui du diamètre maximal de la bague intermédiaire 4 au plus fort du chanfrein 42. On utilise une conduite fluidique 8 par ailleurs pourvue d'une gorge annulaire ici circulaire 81 destinée à recevoir les branches 60 de l'élément de verrouillage 6. L'extrémité de la conduite fluidique n'a pas besoin d'avoir une forme particulière.

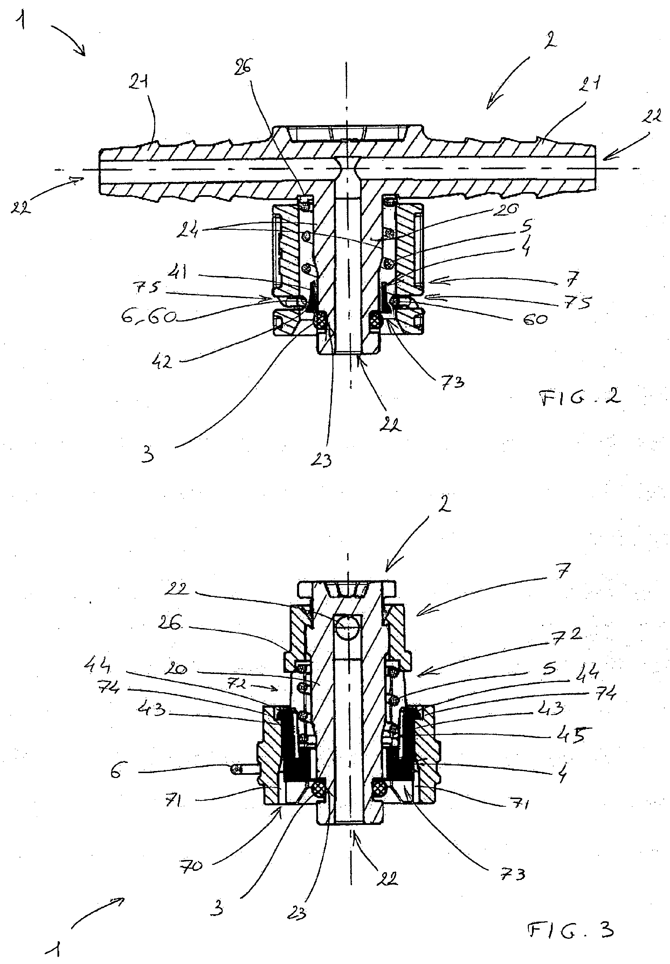

En référence aux figures 2 et 3, avant utilisation du dispositif de raccordement fluidique 1, on assemble le joint annulaire 3, l'élément de rappel élastique 5, la bague intermédiaire 4, le manchon 7 et l'élément de verrouillage 6 sur le corps 2. Pendant l'assemblage, l'élément de rappel élastique 5 est guidé sur l'embout tubulaire 20 par les nervures longitudinales 24 et les rampes inclinées 25 en facilitant l'introduction. Pour insérer la bague intermédiaire 4 dans le manchon 7, les languettes 43 sont élastiquement déformées l'une vers l'autre pour autoriser le franchissement des rainures longitudinales 71 par les ergots radiaux 44. Lorsque les ergots radiaux 44se trouvent en regard des fenêtres radiales 72, les languettes 43 se détendent. La bague intermédiaire 4 est alors bloquée dans le manchon 7 par ses ergots radiaux 44 et les évidements radiaux intérieurs 74 du manchon 7. Dans cet état pré-assemblé du dispositif de raccordement fluidique 1, les branches 60 de l'élément de verrouillage 6 sont en position verrouillée, proéminentes dans la chambre annulaire 73 et en appui sur l'anneau de guidage 40 de la bague intermédiaire 4. La bague intermédiaire 4 est maintenue dans sa position frontale par l'élément de rappel élastique 5. La position angulaire de la bague intermédiaire 4 par rapport au manchon 7 est garantie par les languettes 43 et les fenêtres radiales 72. De plus, la position angulaire du manchon 7 par rapport au corps 2 est garantie par les ailes longitudinales 77 et les embouts crantés 21.

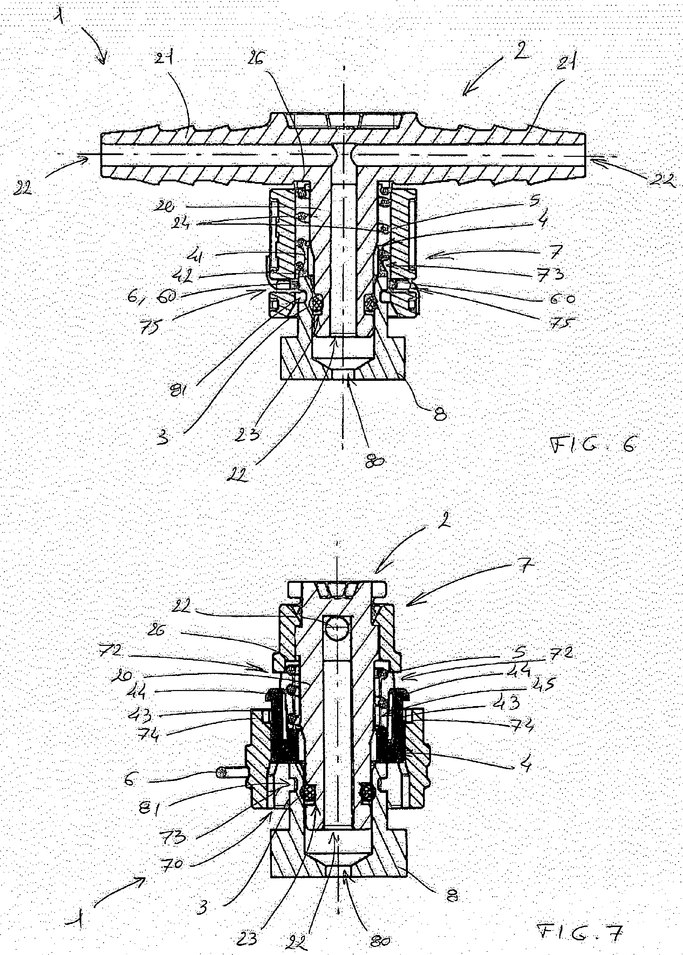

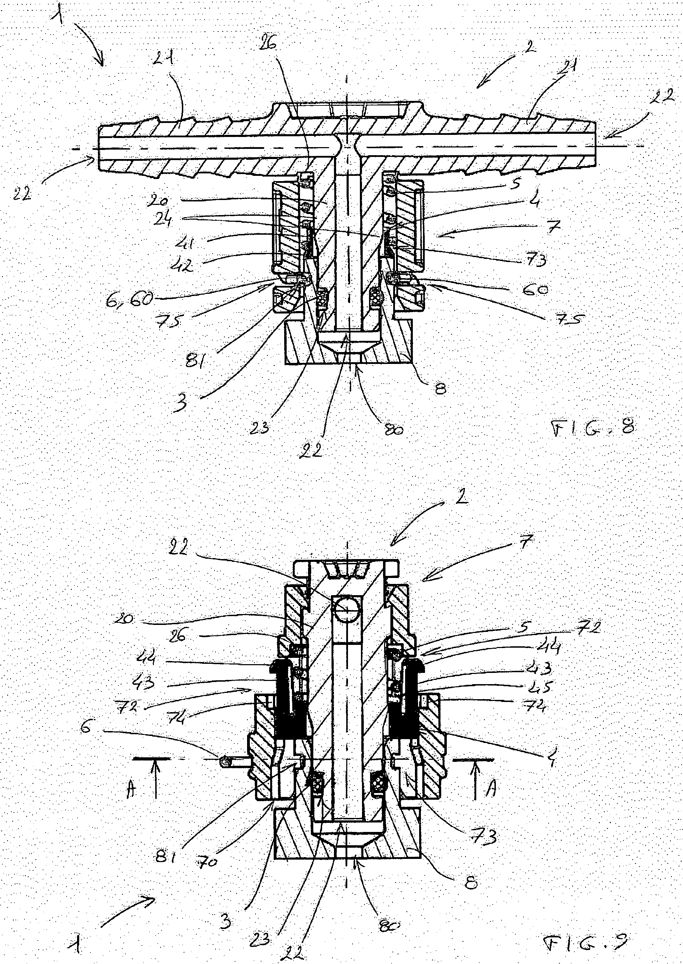

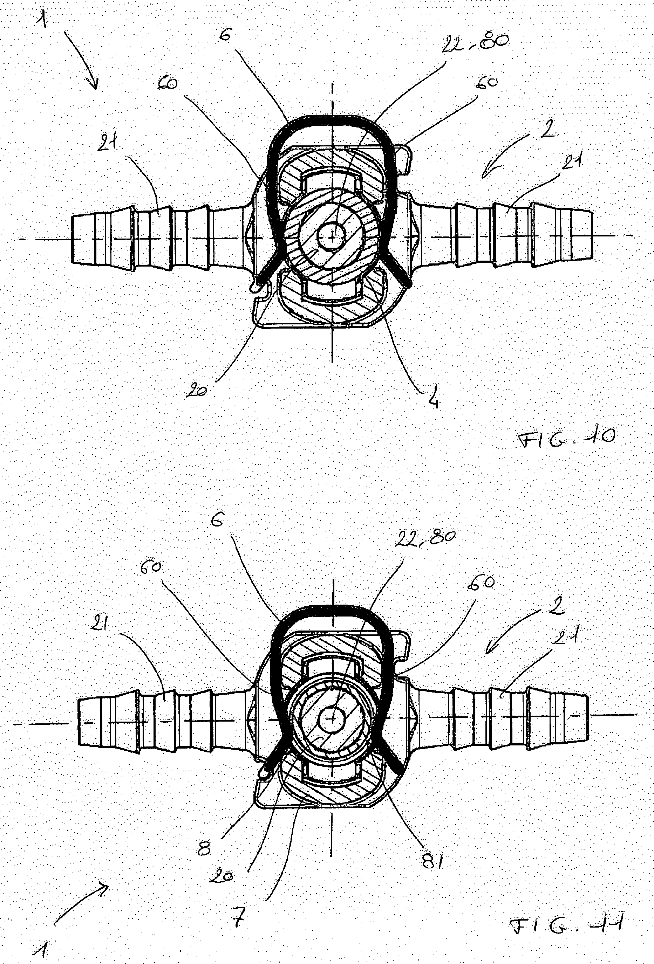

En référence aux figures 4 et 5, pour emmancher une conduite fluidique 8, on la présente dans l'axe de l'embout tubulaire 20 puis on l'insère axialement sur l'embout tubulaire 20 et dans l'orifice intérieur 70 du manchon 7. Se faisant, l'extrémité libre de la conduite fluidique 8 arrive en contact avec le flanc de la bague intermédiaire 4. L'étanchéité entre la conduite fluidique 8 et l'embout tubulaire 20 est assurée par le joint annulaire 3. En référence aux figures 6 et 7, on poursuit l'insertion axiale de l'extrémité libre de la conduite fluidique 8, ce qui provoque le déplacement de la bague intermédiaire 4 dans la chambre annulaire 73, la compression progressive de l'élément de rappel élastique 5 et le glissement des branches 60 de l'élément de verrouillage 6 sur l'anneau de guidage 40. L'élément de verrouillage 6 est alors encore en position verrouillée. On poursuit davantage l'insertion de l'extrémité libre de la conduite fluidique 8. Les branches 60 de l'élément de verrouillage 6 en contact avec le chanfrein 42 sont élastiquement écartées l'une de l'autre transversalement à la direction A jusqu'au franchissement du chanfrein 42. Comme illustré par la figure 10, les branches 60 de l'élément de verrouillage 6 sont alors en position déverrouillée dans laquelle elles sont éloignées d'une distance autorisant le passage sans effort de l'extrémité libre de la conduite fluidique 8. Pendant cette étape, la compression de l'élément de rappel élastique 5 est augmentée. On poursuit davantage l'insertion de l'extrémité libre de la conduite fluidique 8. En référence aux figures 8, 9 et 11, lorsque les branches 60 de l'élément de verrouillage 6 sont en regard de la gorge circulaire 81 de la conduite fluidique 8, elles se relâchent jusque dans leur position verrouillée dans laquelle elles sont logées dans la gorge circulaire 81 et empêchent le retrait de la conduite fluidique 8 du manchon 7 et de l'embout tubulaire 20. La conduite fluidique est alors en butée sur l'embout tubulaire. L'étanchéité entre la conduite fluidique 8 et l'embout tubulaire 20 reste assurée par le joint annulaire 3. Dans cette position verrouillée, les languettes 43 de la bague intermédiaire 4 sont visibles au travers des fenêtres radiales 72 du manchon 7. Le contrôle visuel de la position des languettes 43 dans les fenêtres radiales 72 permet de déduire le bon raccordement de la conduite fluidique 8 et son verrouillage effectif. La conduite fluidique 8 est solidement emmanchée au dispositif de raccordement fluidique 1.

Si nécessaire, la conduite fluidique 8 peut être facilement démontée du dispositif de raccordement fluidique 1 en sollicitant les languettes 43 l'une vers l'autre de sorte à dégager les ergots radiaux 44 des évidements radiaux intérieurs 74. L'élément de rappel élastique 5 peut alors être dégagé par une traction en force sur la conduite fluidique 8 pour faire sortir les branches 60 de l'élément de verrouillage 6 de la rainure circulaire de la gorge circulaire 81 de la conduite fluidique 8. L'élément de rappel élastique 5 agit à l'encontre du déplacement axial de la bague intermédiaire en direction de l'embout tubulaire et tend à maintenir la bague intermédiaire 4 dans sa position initiale frontale quand elle n'est pas poussée par la conduite fluidique enfichable. Ainsi, après le démontage de la conduite fluidique 8, cette dernière peut être de nouveau raccordée au dispositif de raccordement fluidique 1 tel que décrit précédemment.

Comme il ressort clairement de la description qui précède, le dispositif de raccordement fluidique 1 selon l'invention permet de limiter les efforts à fournir lors de l'emmanchement de la conduite fluidique 8. En effet, la bague intermédiaire 4 avec en particulier le chanfrein 42 permet de faciliter le franchissement de l'élément de verrouillage 6 par la conduite fluidique 8 tout en ne nécessitant pas de forme particulière pour l'extrémité de la conduite fluidique 8. Il va de soi que la présente invention ne saurait être limitée à la description qui précède du mode de réalisation, susceptible de subir quelques modifications sans pour autant sortir du cadre de l'invention.

## Revendications

1. Dispositif de raccordement fluidique (1) comprenant un corps tubulaire permettant une circulation d'un fluide et présentant un embout tubulaire (20) s'étendant selon une certaine direction axiale (A), l'embout tubulaire étant destiné à être raccordé par insertion axiale à une conduite enfichable (8) présentant une gorge annulaire extérieure de verrouillage, le dispositif comportant en outre une tête d'assemblage (7) dans laquelle est monté l'embout tubulaire, cette tête d'assemblage comportant une chambre de réception (73) qui est coaxiale à l'embout tubulaire et qui est adaptée pour recevoir ladite conduite enfichable afin de raccorder celle-ci à l'embout tubulaire, la tête d'assemblage comportant aussi un élément de verrouillage (6) en forme de U avec deux bras qui s'introduisent dans ladite chambre de réception (73) selon une direction d'insertion perpendiculaire à ladite direction axiale (A), les deux bras étant adaptés pour s'écarter élastiquement l'un de l'autre dans ladite chambre de réception (73) selon une direction transversale à ladite direction axiale (A) quand la conduite (8) est déplacée axialement dans la chambre de reception (73) jusqu'à une position de butée où elle est complètement raccordée à l'embout tubulaire (20), lesdits bras (60) étant adaptés en outre pour s'engager dans ladite gorge annulaire (81) de la conduite enfichable (8) en se rapprochant l'un de l'autre quand ladite conduite enfichable (8) a atteint sa position de butée par rapport à l'embout tubulaire de façon à verrouiller en position la conduite enfichable (18) dans la tête d'assemblage (7), **caractérisé en ce qu'**il est prévu en outre une bague intermédiaire (4) montée coulissante dans ladite chambre de réception (73) suivant ladite direction axiale (A) pour réaliser une pré ouverture de l'élément de verrouillage, cette bague intermédiaire (4) étant adaptée pour être poussée axialement par ladite conduite enfichable (8) quand celle-ci est déplacée dans ladite chambre de réception (73) en direction de l'embout tubulaire (20), cette bague intermédiaire présentant des chanfreins (42) qui agissent pour écarter élastiquement les deux bras de l'élément de verrouillage l'un par rapport à l'autre juste avant que ladite conduite enfichable atteigne sa position de butée.

2. Dispositif selon la revendication 1, **caractérisé en ce qu'**il comporte un élément de rappel élastique (5) monté dans ladite chambre de réception (73) de telle façon à agir à rencontre dudit déplacement axial de la bague intermédiaire (4) de telle façon à la ramener dans une position initiale quand elle n'est pas poussée par une conduite (8).

3. Dispositif selon la revendication 1 ou 2, **caractérisée en ce que** ladite bague intermédiaire (4) comporte une languette témoin (43) visuellement apparente de l'extérieur de la tête d'assemblage (7) quand ladite conduite (8) est verrouillée sur l'embout tubulaire (20).

## Patentansprüche

1. Fluidverbindungsvorrichtung (1), umfassend einen röhrenförmigen Körper, der eine Zirkulation eines Fluides ermöglicht und ein röhrenförmiges Anschlussstück (20) aufweist, das sich entlang einer bestimmten axialen Richtung (A) erstreckt, wobei das röhrenförmige Anschlussstück dazu bestimmt ist, durch axiales Einführen mit einem steckbaren Rohr (8) verbunden zu werden, das eine äußere ringförmige Verriegelungsnut aufweist, wobei die Vorrichtung ferner einen Montagekopf (7) aufweist, in dem das röhrenförmige Anschlussstück befestigt ist, wobei dieser Montagekopf eine Aufnahmekammer (73) aufweist, die koaxial mit dem röhrenförmigen Anschlussstück ist und die geeignet ist, um das steckbare Rohr aufzunehmen, um dieses mit dem röhrenförmigen Anschlussstück zu verbinden, wobei der Montagekopf auch ein U-förmiges Verriegelungselement (6) mit zwei Armen aufweist, die in die Aufnahmekammer (73) entlang einer Einführungsrichtung, die senkrecht zu der axialen Richtung (A) ist, eingeführt werden, wobei die zwei Arme geeignet sind, um sich in der Aufnahmekammer (73) entlang einer Richtung, die quer zu der axialen Richtung (A) ist, elastisch voneinander weg zu spreizen, wenn das Rohr (8) axial in der Aufnahmekammer (73) bis zu einer Anschlagposition verschoben wird, in der es vollständig mit dem röhrenförmigen Anschlussstück (20) verbunden ist, wobei die Arme (60) ferner geeignet sind, um in die ringförmige Nut (81) des steckbaren Rohrs (8) einzugreifen, indem sie sich einander annähern, wenn das steckbare Rohr (8) seine Anschlagposition gegenüber dem röhrenförmigen Anschlussstück derart erreicht hat, um das steckbare Rohr (8) in Position in dem Montagekopf (7) zu verriegeln, **dadurch gekennzeichnet, dass** ferner ein Zwischenring (4) vorgesehen ist, der verschiebbar in der Aufnahmekammer (73) entlang der axialen Richtung (A) befestigt ist, um eine Voröffnung des Verriegelungselementes zu erstellen, wobei dieser Zwischenring (4) geeignet ist, um durch das steckbare Rohr (8) axial geschoben zu werden, wenn dieses in der Aufnahmekammer (73) in Richtung des röhrenförmigen Anschlussstücks (20) verschoben wird, wobei dieser Zwischenring Abschrägungen (42) aufweist, die wirken, um die zwei Arme des Verriegelungselementes relativ zueinander elastisch abzuspreizen, unmittelbar bevor das steckbare Rohr seine Anschlagposition erreicht.

2. Vorrichtung nach Anspruch 1, **dadurch gekennzeichnet, dass** sie ein elastisches Rückstellelement (5) aufweist, das in der Aufnahmekammer (73) derart befestigt ist, um gegen die axiale Verschiebung des Zwischenrings (4) derart zu wirken, um ihn in eine Anfangsposition zurückzubringen, wenn er nicht von einem Rohr (8) geschoben wird.

3. Vorrichtung nach Anspruch 1 oder 2, **dadurch gekennzeichnet, dass** der Zwischenring (4) eine Kontrollzunge (43) aufweist, die von der Außenseite des Montagekopfes (7) visuell erkennbar ist, wenn das Rohr (8) auf dem röhrenförmigen Anschlussstück (20) verriegelt ist.

## Claims

1. A fluid communication device (1) comprising a tubular body permitting circulation of a fluid and having a tubular end piece (20) extending in a given axial direction (A), said tubular end piece being intended to be connected by axial insertion into a plug-in pipe (8) having an outer annular locking neck, the device further comprising an assembly head (7) in which the tubular end piece is mounted, this assembly head comprising a receiving chamber (73) that is coaxial with the tubular end piece and is adapted to receive said plug-in pipe so as to connect it to the tubular end piece, the assembly head also comprising a U-shaped locking element (6) with two arms that insert into said receiving chamber (73) in an insertion direction that is perpendicular to said axial direction (A), the two arms being adapted to spread apart elastically in said receiving chamber (73) in a direction transverse to said axial direction when the pipe is displaced axially in the receiving chamber (73) to a position of abutment in which it is fully connected to the tubular end piece (20), said arms (60) further being adapted to engage in said annular neck (81) of the plug-in pipe (8) by moving closer together when said plug-in pipe (8) has reached its position of abutment with respect to the tubular end piece, so as to lock the plug-in pipe (8) in position in the assembly head (7), **characterized in that** further provided is an intermediate ring (4), which is mounted in said receiving chamber (73) so as to be able to slide in said axial direction (A) in order to effect a pre-opening of the locking element, said intermediate ring (4) being adapted to be pushed axially by said plug-in pipe (8) when the latter is displaced in said receiving chamber (73) toward the tubular end piece (20), said intermediate ring having chamfers (42) that act to elastically spread apart the two arms of the locking element just before said plug-in pipe reaches its position of abutment.

2. The device according to claim 1, **characterized in that** it comprises an elastic biasing element (5) mounted in said receiving chamber (73) in such a way as to act in opposition to said axial displacement of the intermediate ring (4) so as to return the latter to an initial position when the latter is not being pushed by a pipe (8).

3. The device according to claim 1 or 2, **characterized in that** said intermediate ring (4) comprises a reference tongue (43) that is visually apparent from the outside of the assembly head (7) when said pipe (8) is locked on the tubular end piece (20).
